# EUROPEAN PATENT APPLICATION

(11) **EP 1 670 263 A1**
(43) Date of publication of application: **14.06.2006**
(21) Application number: 04797332.6
(22) Date of filing: 15.11.2004
(51) Int. Cl.: H04Q 7/20

(54) **A METHOD OF IMPLEMENTING MULTICASTING SERVICE**

(30) Priority: 14.11.2003 CN 200310116257
(71) Applicant: Huawei Technologies Co., Ltd., Longgang District, Shenzehen, Guangdong 518129 (CN)
(72) Inventor: ZHANG, Hai Huawei Administration Building, Shenzhen, Guangdong 518129 (CN); ZHANG, Wenlin Huawei Administration Building, Shenzhen, Guangdong 518129 (CN)
(74) Representative: Manitz, Finsterwald & Partner GbR
(86) International application number: PCT/CN2004/001300
(87) International publication number: WO 2005/053331

(57) **Abstract**

The present invention discloses a method for implementing Multimedia Broadcast Multicast Service (MBMS), wherein multiple service modes are set for the MBMS and each service mode is corresponding to a path, a user equipment (UE) activates at least one service mode supported by the current network and receives the MBMS data in the corresponding path of the activated service mode from the network side. This method guarantees that UE covered by networks of multiple types can safely receive the subscribed MBMS data. When the current network covering UE fails to support the activated service mode, the UE will activate a service mode that the current network supports such that the UE can receive the MBMS data in this service mode. Therefore, it is ensured that UE can receive the subscribed MBMS data in any network environments, thus satisfying subscribers' demands to a larger extent.

## Description

### Field of the Technology

The present invention generally relates to multicasting techniques in wireless communications, more particularly to a method for implementing Multimedia Broadcast Multicast Service (MBMS).

### Background of the Invention

With the development of mobile communication technology, the third generation mobile communication can provide data services with higher transmission rate than the second generation mobile communication such that multiple forms of services like video telephone, image downloading, and high-rate Internet browsing can be supported. One of such services features simultaneous transmission of messages to a plurality of user equipment (UE) in a wireless network that subscribe to the same service, like weather forecast, news short, sports competition collections and so on. With such a characteristic of sending services simultaneously, the third generation mobile communication introduces the concept of multicast/broadcast.

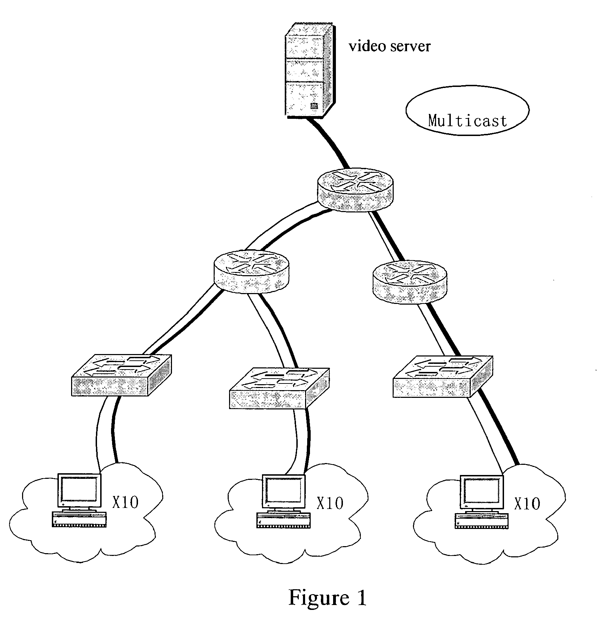

As shown in Figure 1, a multicast service server, e.g. a video server, can transmit MBMS data to UE through a distribution tree that may comprise multiple levels of intermediate nodes. A common characteristic of multicast/broadcast is: while transmitting data from a source node to a destination node, a multicast service server always carries out single-path transfer. Namely, for each intermediate node, only one copy of the data transferred to the intermediate node no matter how many nodes in the downstream expecting to receive data; after receiving the data, an intermediate node will copy the data according to the number of the downstream nodes expecting to receive the data, and distribute the data to the those nodes. Thus, there is only one copy of the data being transferred in each branch of the distribution tree and only one portion of the transmission resource is occupied, so is the case with the root node. Compared with unicast transmission, where a multicast service server has to copy the data for as many copies as the number of end UE, multicast/broadcast transmission can save the network resources under the circumstances of providing the same data for a large number of UE simultaneously.

In the criterions of the third Generation Partnership Project (3GPP), existing criterions of WCDMA have several versions including R4, R5 and R6. These versions are of different wireless bearer capacities in the portion of access network, for instance, data bearer capacity of R4 is 384Kbps while data bearer capacity of R5 is 2Mbps. In the early phase of networking, it is inevitable for a WCDMA system to network with a second generation mobile communications network, the data bearer capacity of which, however, is between 70kbps~80kbps. Therefore, it is common that there are covered areas with multiple wireless bearer capacities in a network as a whole.

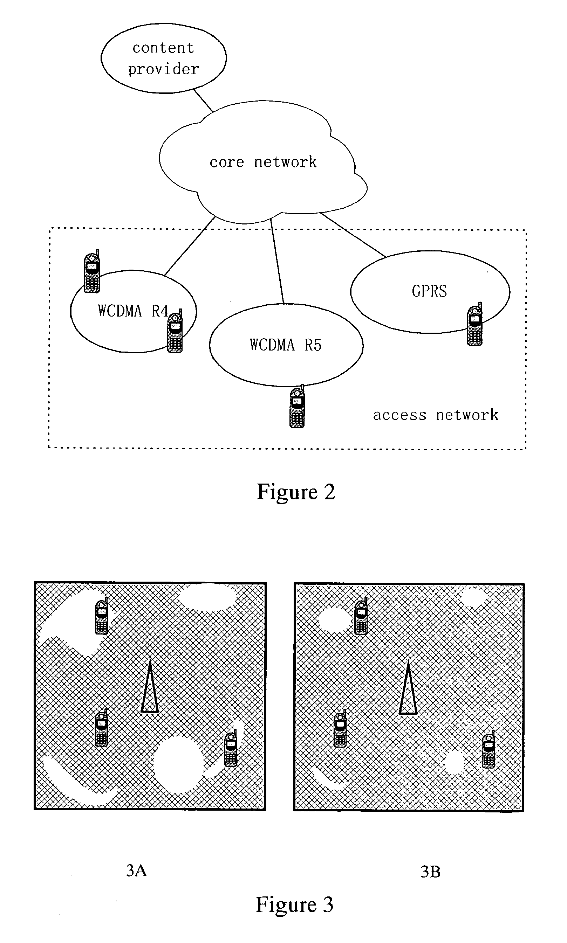

The above situation also exists in the third generation mobile communications organization (3GPP2). As shown in Figure 2, the 3GPP2 standard includes multiple versions of wireless network, wherein wireless bearer capacities of each version are different.

Moreover, in terms of a wireless cell, receiving situations of radio signals in different areas of the same cell may be different because of different distances between UE and a base station as well as building obstruction, etc. In terms of one signal, if the UE is near the base station and there is no building obstruction in between, the signal quality would be better, otherwise it would be worse. In terms of different signals, e.g. signals for transmitting high-rate data or signals for transmitting low-rate data, since the signal noise ratios for achieving the same receiving quality are different when these signals arrive at UE, signals with lower rate data requires lower signal noise ratio. As shown in Figure 3, wherein 3A denotes the cell coverage for sending high-rate data and 3B denotes the cell coverage for sending low-rate data, the signals with lower-rate data can cover more areas in the cell with smaller blind zone while the signal with higher-rate data covers less area in the cell with larger blind zone. For instance, UE supporting 384kbps will be able to enjoy video telephone service in a location with better signal quality while using only voice telephone service in a location with worse signal quality.

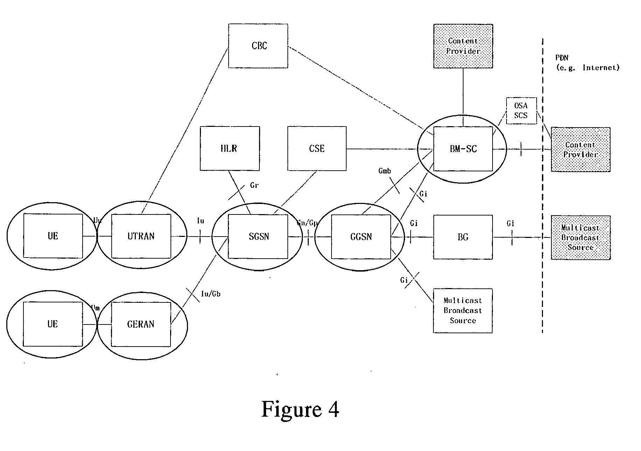

In the prior art, 3GPP adopts a MBMS distribution tree to transfer multicast data. As shown in Figure 4; the source of a MBMS distribution tree is a content provider, and MBMS is provided to User Equipment (UE) through Broadcast/Multicast-Service Center (BM-SC), Gateway General Packet Radio Service (GPRS) Support Node (GGSN), Service GPRS Support Node (SGSN) and Radio Access Network (RAN). Furthermore, the MBMS distribution tree may go through multiple Radio Network Controllers (RNC) and SGSNs, and these bearer resources are shared by a plurality of UEs accessing the same MBMS service, which requires that each branch of this MBMS distribution tree has the same QoS (Quality of Service). According to the existing protocol criterions, QoS is configured for each relevant node successively in the data transmitting direction during the MBMS Session Start, i.e. in the order of BM-SC→GGSN→SGSN→RAN→UE.

After the MBMS distribution tree has been established, no modification of the existing MBMS distribution tree will be made just because QoS of a certain branch thereof needs to be changed, nor is it allowed to negotiate QoS among network units of a Universal Mobile Telecommunication System (UMTS).

Therefore, suppose that a wireless network can provide certain MBMS and QoS thereof is already negotiated, when a UE located in the covered area of this wireless network requests to enter this MBMS, however, this covered area of the network is rather congested and the negotiated QoS is not achievable, the UE will then be rejected to join in this MBMS. Likewise, when a UE having joined in a certain MBMS roams to a network with lower version, since the QoS cannot be kept, the request from the UE for establishing a MBMS distribution branch through the currently covering network will be rejected too. When located in a place of a network with worse signal quality, the UE will obviously not be able to receive the subscribed MBMS any more.

To sum up, due to the constraints of various conditions of wireless channels and various capacities of wireless networks at present, it is possible that UE is not able to receive the subscribed MBMS and the subscribers become less satisfied with the network.

### Summary of the Invention

In view of the above, the present invention is to provide a method for implementing MBMS such that UE could be guaranteed to receive the subscribed MBMS under the circumstances of various wireless channels and wireless network capacities.

In accordance with the present invention, a method for implementing a Multimedia Broadcast Multicast Service (MBMS), includes, multiple service modes for the MBMS and each service mode corresponding to a path is set, and
user equipment (UE) activates at least one service mode supported by a current network covering the UE, and receives the MBMS data in the corresponding path of the activated service mode from the network side.

Wherein the service modes are set according to the level of Quality of Service (QoS) and the format of transmission.

Wherein the QoS level is set according to data transmission rate, delay requirement, fault-tolerant capacity, or any combination of the three.

Wherein the service mode comprises the video, voice, image, or text format, or any combination of the four.

Wherein the service modes supported by the current network are determined by network type, network load and the location area of the UE, or one of the three, or any combination of the three.

The method further includes:
at least one service mode as the mode requested by the UE is pre-selected;
wherein the service mode supported by the current network covering the UE is one of the service modes requested by the UE.

The method further includes: priorities for the multiple service modes according to the bearer capacity of network is set, and in the initial state, the UE activates the service mode with the highest priority among the requested service modes; before the UE receives the MBMS data,
A1. it is judged whether the activated service mode of the UE is the mode with the highest priority among all the service modes requested by the UE; if yes, step B1 is executed; otherwise, the service mode with the highest priority as the current service mode is set, and step B1 is executed;
B1. it is judged whether the current network covering the UE supports the current service mode; if yes, step D1 is executed; otherwise, step C1 is executed;
C1. it is judged whether there are service modes among the requested service modes with lower priority than the current service mode of the UE; if yes, one of the service modes as the current service mode is selected according to the priority order, and step Blis executed; otherwise, this procedure is ended;
D1. it is judged whether the current service mode is activated; if yes, step Elis executed; otherwise, the activated service mode in step A1 is deactivated and the current service mode is activated before step A1 is executed;
E1. the UE receives the MBMS data in the corresponding path of the activated service mode from the network side.

The method further includes: priorities for the multiple service modes is set according to the bearer capacity of network, and in the initial state, the UE activates the service mode with the highest priority among all the requested service modes; before the UE receives the MBMS data:
A2. it is judged whether the current network covering the UE can support the activated service mode of the UE; if yes, the activated service mode as the current service mode is set and step D2 is executed, otherwise, step B2 is executed;
B2. it is judged whether there are service modes among the requested service modes with lower priority than the current service mode; if yes, one of the service modes is selected according to the priority order, and step C2 is executed; otherwise, the current procedure jumps out;
C2. it is judged whether the current network covering the UE supports the selected service mode; if yes, the selected service mode is activated and step D2 is executed; otherwise, the selected service mode as the current service mode is set and step B2 is executed;
D2. the UE receives the MBMS data in the corresponding path of the activated service mode from the network side.

The method further includes, priorities for the multiple service modes is set according to the bearer capacity of network; during receiving the MBMS data:
the UE judges whether it itself can continuously receive the MBMS data in the activated service mode; if yes, the UE jumps out of the current procedure; otherwise, a service mode with lower priority than the activated service mode from the requested service modes is selected, the activated service mode is deactivated and the selected service mode is activated;
the UE receives the MBMS data in the corresponding path of the activated service mode from the network side.

Wherein the path includes the multicast IP address of the service mode.

Wherein the pre-selected service mode includes one or more than one service bearer mode; then at least one activated service mode supported by the current network covering the UE comprises all the service bearer modes selected by the UE.

The present invention configures multiple service modes for each MBMS such that UE can subscribe to a desired MBMS and the service mode. When the current network covering UE does not support the activated service mode, the UE may activate another service mode that is supported by the current network such that the UE can receive the MBMS in this service mode. Therefore it is guaranteed that UE can receive a subscribed MBMS in any network environment, thus subscribers' demands can be satisfied to a greater extent.

### Brief Description of the Drawings

Figure 1 is a schematic diagram illustrating MBMS transmission in the prior art;
Figure 2 is a schematic diagram illustrating the solution of multi-mode networking;
Figure 3 is a schematic diagram illustrating the signal coverage of data transmission in different rates by the same base station;
Figure 4 is a schematic diagram illustrating the system structure supporting multimedia broadcast/multicast;
Figure 5 is the flowchart of the method of the present invention according to an Embodiment 1;
Figure 6 is the flowchart of the method of the present invention according to an Embodiment 2;
Figure 7 is a schematic diagram illustrating the networking architecture of the method according to an embodiment of the present invention.

### Detailed Description of the Embodiments

In order to solve the problem that UE is unable to receive a subscribed MBMS when the multicast/broadcast mode is adopted to transmit data service in a wireless communication system due to reasons such as constraints of capacities of the wireless network, the present invention distinguishes one MBMS by different service modes. To be specific, set each MBMS in multiple service modes and each service mode corresponds to a path such that information contents of one MBMS is described in different service modes. In accordance with the present invention, at least one service mode that the current network supports is selected from the multiple service modes and is activated such that UE can receive the MBMS data in the corresponding path of the activated service mode from the network side. The network side may include a MBMS provider or the Broadcast/Multicast-Service Center (BM-SC). The path may include the multicast IP address or other contacting means of each service mode. The service modes supported by the current network covering the UE can be determined by the type and load of the network as well as the located area of the UE.

In practical applications, UE may subscribe to a desired MBMS as well as the service modes thereof. Then MBMS can be subscribed in the following way: combine all the corresponding service modes of a MBMS; each combination forms a MBMS type; send to UE an assemble of MBMS types; the UE selects a MBMS type from the assemble based on the need of a subscriber and sends to the network side the selected MBMS type by various approaches, such as SMS, WAP, and URL; the network side stores the MBMS type selected by this UE, selects at least one service mode from the requested modes, and activates the selected service mode. Obviously, it is possible to configure the service modes of MBMS requested by a subscriber directly at the network side and select one or a plurality of service modes to activate.

If the service mode pre-selected by the UE includes a plurality of service bearer modes, UE may simultaneously activate all the service modes requested by the subscriber so long as the service modes are supported by the current network covering the UE.

The technical scheme in accordance with the present invention will be hereinafter described in detail with reference to the accompanying drawings and specific embodiments.

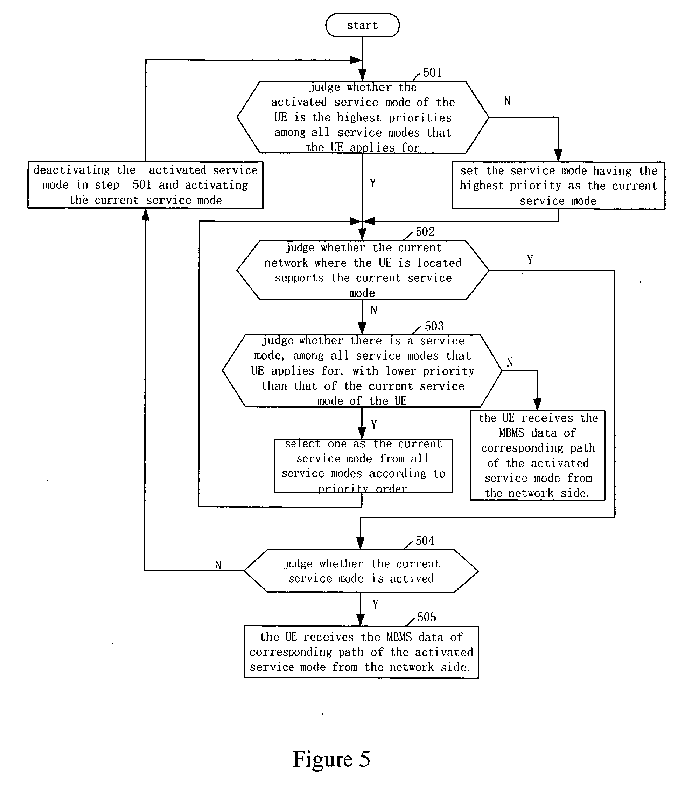

With reference to Figure 5, in the present embodiment, multiple service modes are configured with priority according to the bearer capacity of the network. In the initial state, UE activates the service mode with the highest priority among all the requested service modes. Before the UE receives the MBMS data, the procedure includes the following steps:
Step 501: it is judged whether the service mode activated by the UE is the mode with the highest priority among all the service modes the UE has requested; if yes, step 502 is executed; otherwise, the service mode having the highest priority is set as the current service mode and then step 502 is executed;
Step 502: it is judged whether the current network covering the UE supports the current service mode; if yes, step 504 will be executed, otherwise, step 503 will be executed;
Step 503: it is judged whether there are service modes with lower priority among all the service modes that the UE has requested than the current service mode of the UE; if yes, one of such service modes will be selected as the current service mode according to priority order and go to step 502, otherwise, the current MBMS is unsuccessful and this procedure will be ended;
Step 504: it is judged whether the current service mode has been activated, if yes, execute step 505, otherwise, the activated service mode in step 501 will be deactivated and the current service mode will be activated and then step 501 will be executed.
Step 505: the UE receives the MBMS data in the corresponding path of the activated service mode from the network side.

It can be seen from the above steps that, in this embodiment, MBMS data is provided for the subscriber in the service mode with the highest possible priority every time the MBMS data is transmitted to the UE.

The technical scheme in accordance with the present invention will be further described hereinafter with reference to Embodiment 2.

In the present embodiment, multiple service modes are configured with priority according to the bearer capacity of the network. In the initial state, UE activates the service mode with the highest priority among all the requested service modes.

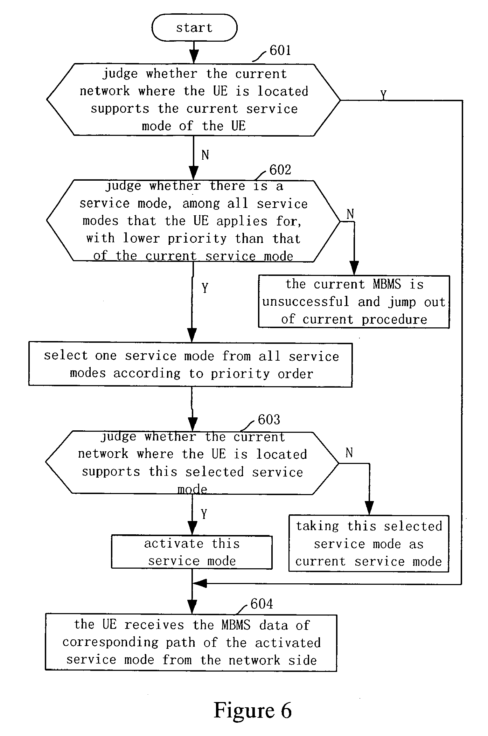

With reference to Figure 6, before the UE receives MBMS data or while the UE is receiving MBMS data, the specific procedure of this embodiment includes:
Step 601: it is judged whether the current network covering the UE supports the activated service mode of the UE; if yes, the activated service mode will be set as the current service mode and step 604 will be executed, otherwise, step 602 will be executed;
Step 602: it is judged whether there is service modes with lower priority among all the service modes that UE has requested than the current service mode of this UE; if yes, one service mode will be selected as the current service mode according to the priority order and step 603 is executed; otherwise, the current MBMS is unsuccessful and this procedure will be ended;
Step 603: it is judged whether the current network covering the UE supports the selected service mode; if yes, this service mode will be activated and step 604 will be executed; otherwise, the selected service mode will be set as the current service mode and step 602 will be executed;
Step 604: the UE receives the MBMS data in the corresponding path of the activated service mode from network side.

If UE can determine through detecting such information as the intensity of radio signals in the cell that the current location cannot meet the rate requirement of downlink receivable data, the UE can reactivate a service mode that the current network supports. While receiving MBMS data, if UE determines that it cannot continuously receive the corresponding MBMS data in the activated service mode or that the quality of the received MBMS data is not satisfactory, the UE can select a service mode with lower priority than the current activated service mode from its requested service modes, deactivate the activated service mode and activate the selected service mode, and then receive the MBMS data in the corresponding path of the activated service mode from network side.

Furthermore, for the sake of the subscriber's need and etc., the UE may activate a plurality of service modes in a same period of time, namely join in a MBMS corresponding to a plurality of service modes at the same time, such that the subscriber can receive the data of one MBMS in different service modes.

It should be noted that the service mode in the embodiments of the can be set according to QoS levels and transmission formats, where the QoS levels can be determined by data rate, delay requirement and fault-tolerant capacity. For instance, according to different transmission rates, MBMS can be divided into services in the formats of video, audio, image, text and so on. Services in the same format may be provided in a plurality of QoS levels. For example, video services may be provided in service streams of 450kbps, 300kbps, 150kbps, 64kbps and etc, which are characterized by requesting different required bit rates. Such service streams may also be referred to as different service modes. Therefore, as far as the same MBMS is concerned, although all the different service modes are employed for the same MBMS, bit quantities needed by different service modes for transmitting information in completing one service are different, the required real-time and fault-tolerant performances are different, and the utilized network capacity and bandwidth for information transmission are different as well.

When priorities are set according to QoS levels and transmission formats, a service mode occupying more resources and requiring a higher QoS level will be set with a higher priority. This means that, in terms of the same service mode, the service demanding wider bandwidth is of higher priority. Therefore, the service stream with wider bandwidth and better quality will be provided first given that the network can afford to provide such a service stream and the UE has subscribed to it. For example, among the video service streams of 450kbps, 300kbps, 150kbps and 64kbps, the service stream of 450kbps is of the highest priority. Priorities of video, audio, image and text services streams are in the descending order. In terms of services with the same transmission formats, e.g. video services, the priority of a video service with higher bandwidth requirement is higher than a video service with lower bandwidth requirement. The priority of a voice service with higher bandwidth requirement is higher than the priority of a video service with lower bandwidth requirement.

Next, an embodiment of application of the present invention will be described with reference to the accompanying drawing.

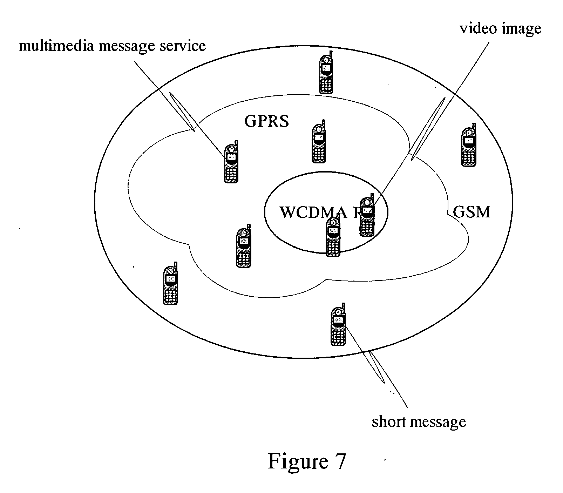

As shown in Figure 7, the wireless communication network of a city is composed of networks of three types. The downtown area is covered by a WCDMA R4 network, other areas inside the city are covered by a GPRS network, and the suburbs are covered by a GSM network. Depending on different types of network, content providers provide services in video, image and text formats on the WCDMA R4 network; provide services in image and text formats on the GPRS network; and provide services in text format based on short messages on the GSM network.

In the present embodiment, the method for implementing MBMS in accordance with this invention is illustrated by an example in which a content provider outside the PLMN provides the MBMS of city weather forecast. The weather forecast is transmitted at 8:00 am and 8:00 pm every day in the formats of video, image and text, wherein there are two bandwidths used for the video format: 128kbps and 64kbps, namely high-quality video and average-quality video. Therefore, the weather forecast service has 4 multicast IP addresses.

Based on the above-mentioned network structure, the specific procedure of the present embodiment comprises the following three parts:
Part 1: in the downtown area of the city, the wireless network, by means of broadcasting, declares to subscribers in the area covered by the network that there is a weather forecast service provided, and transmits the multicast IP addresses of the associated service modes and the priorities thereof to UEs by means of URL, wherein the associated service mode comprises any one of the formats of high-quality video, average-quality video, image and text, or any combination of the four.
Part 2: the UE may select one of the service modes transmitted from the network side to request the service. If the UE selects the combination of high-quality video, average-quality video, image and text, since the high-quality video mode in this combination is of the highest priority, it means that the UE takes the high-quality video as the default activated service mode, and the network side will try to provide the weather forecast service in high-quality video for the UE while providing the service for the UE in other network environments according to the priority order of the combination.
   Suppose that there are three UEs who have received the multicast message about this MBMS sent by the network side.
   UE 1 and UE 2 desire to receive such a service, and express their acceptance of the service by selecting the corresponding settings. UE 1 and 2 subscribe to the service by the network side, and stores the related settings and notify the server at the network side of the settings through the wireless network, and the server stores the settings. UE 1 and 2 initiate a MBMS activation procedure to the multicast IP address of the high-quality video mode, perform the settings at the sides of the core network and access network to join in the multicasting. The network authorizes the joining and returns a success indication to the UE.
   UE 3 desires to receive the service in the image mode and subscribes to the service by getting on line through a computer. Then relevant information will be transmitted to the server providing this service on the Internet, and the server will save the UE's settings. Then the server notifies the UE of the settings via the wireless network and the UE will save the settings. UE 3 initiates a MBMS activation procedure according to multicast IP address of the image mode, performs the settings at the sides of the core network and access network to join the multicasting.
Part 3: At 7:50 pm, UE 1 arrives at home that is covered by the GPRS network. The network detects that UE 1 currently joins the service in the high-quality video mode while only the service in the MMS mode can be provided in this area. Therefore, the network sends a signalling to the UE to let the UE apply for the weather forecast in the MMS mode. After receiving this signalling, the UE applies for the service in this mode automatically according to the multicast IP address of weather forecast in the MMS mode. The network then approves the UE 's joining of the service in this mode and returns a success indication to the UE.
   UE 2 comes to a basement in the downtown area that is covered by WCDMA R4 network. By detecting the signal in the pilot channel of the cell, the UE determines, according to the relationship between the signal in the pilot channel and the downlink receiving rate, that only the average-quality video service can be received currently instead of the high-quality video service. The UE applies for the service in the average-quality video mode provided by the network; the network approves the UE's joining of the service in the average-quality video mode and returns a success indication to the UE.
   UE 3 is on vacation in the suburbs covered by the GSM network. When detecting that the current network is GSM, UE 3 automatically applies for the weather forecast in the text mode provided by the network according to the service list and multicast IP addresses saved. The network then approves UE's joining of the service in the text mode and returns a success indication to the UE.
   At 8:00 pm, the content provider starts to provide the MBMS of weather forecast to the UEs, so UE 1 receives the weather forecast in the MMS mode, UE 2 receives the weather forecast in the average-quality video mode, and UE 3 receives the weather forecast in a short message.

The above description is just preferable embodiments of the present invention and should not be used to confine the protection scope thereof. Any change, equivalent substitution and improvement made without departing from the sprit and principle of this invention should be covered by the protection scope of this invention as defined by the appended claims.

## Claims

1. A method for implementing a Multimedia Broadcast Multicast Service (MBMS), comprising setting multiple service modes for the MBMS and each service mode corresponding to a path, the method further comprising:
user equipment (UE) activating at least one service mode supported by a current network covering the UE, and receiving the MBMS data in the corresponding path of the activated service mode from the network side.

2. The method according to claim 1, wherein the service modes are set according to a level of Quality of Service (QoS) and the format of transmission.

3. The method according to claim 2, wherein the QoS level is set according to data transmission rate, delay requirement, fault-tolerant capacity, or any combination of the three.

4. The method according to claim 2, wherein the service mode comprises the video, voice, image, text format, or any combination of the four.

5. The method according to claim 1, wherein the service modes supported by the current network are determined by the network type, network load and the location area of the UE, or one of the three, or any combination of the three.

6. The method according to claim 1, further comprising:
pre-selecting at least one service mode as the mode requested by the UE;
wherein the service mode supported by the current network covering the UE is one of the service modes requested by the UE.

7. The method according to claim 6, further comprising: setting priorities for the multiple service modes according to the bearer capacity of network, and in the initial state, the UE activating the service mode with the highest priority among the requested service modes; the method further comprising before the UE receives the MBMS data,
A1. judging whether the activated service mode of the UE is the mode with the highest priority among all the service modes requested by the UE; if yes, executing step B1; otherwise, setting the service mode with the highest priority as the current service mode, and executing step B1;
B1. judging whether the current network covering the UE supports the current service mode; if yes, executing step D1; otherwise, executing step C1;
C1. judging whether there are service modes among the requested service modes with lower priority than the current service mode of the UE; if yes, selecting one of the service modes as the current service mode according to the priority order, and returning to step B1; otherwise, ending this procedure;
D1. judging whether the current service mode is activated; if yes, executing step E1; otherwise, deactivating the activated service mode in step A1 and activating the current service mode before executing step A1;
E1. the UE receiving the MBMS data in the corresponding path of the activated service mode from the network side.

8. The method according to claim 6, further comprising: setting priorities for the multiple service modes according to the bearer capacity of network, and in the initial state, the UE activating the service mode with the highest priority among all the requested service modes; the method further comprising before the UE receives the MBMS data:
A2. judging whether the current network covering the UE can support the activated service mode of the UE; if yes, setting the activated service mode as the current service mode and executing step D2, otherwise, executing step B2;
B2. judging whether there are service modes among the requested service modes with lower priority than the current service mode; if yes, selecting one of the service modes according to the priority order, and executing step C2; otherwise, jumping out of the current procedure;
C2. judging whether the current network covering the UE supports the selected service mode; if yes, activating the selected service mode and executing step D2; otherwise, setting the selected service mode as the current service mode and executing step B2;
D2. the UE receiving the MBMS data in the corresponding path of the activated service mode from the network side.

9. The method according to claim 6, further comprising, setting priorities for the multiple service modes according to the bearer capacity of network; during receiving the MBMS data:
the UE judging whether it itself can continuously receive the MBMS data corresponding to service mode; if yes, jumping out of the current procedure; otherwise, selecting a service mode with lower priority than the activated service mode from the requested service modes, deactivating the activated service mode and activating the selected service mode;
the UE receiving the MBMS data in the corresponding path of the activated service mode from the network side.

10. The method according to claim 1, wherein the path comprises the multicast IP address of the service mode.

11. The method according to claim 1, wherein the pre-selected service mode comprises one or more than one service bearer mode; then at least one activated service mode supported by the current network covering the UE comprises all the service bearer modes selected by the UE.
